# EUROPEAN PATENT SPECIFICATION

(11) **EP 0 251 172 B1**
(45) Date of publication and mention of the grant of the patent: **12.05.1993**
(21) Application number: 87109052.8
(22) Date of filing: 24.06.1987
(51) Int. Cl.: F15B 11/05, F15B 13/02

(54) **Hydraulic control system**
Hydraulisches Steuersystem
Système de commande hydraulique

(30) Priority: 30.06.1986 US 880587
(43) Date of publication of application: 07.01.1988
(73) Proprietor: Vickers Incorporated, Troy Michigan 48084 (US)
(72) Inventor: Curnow, John W., Utica Michigan 48087 (US)
(74) Representative: Blumbach Weser Bergen Kramer

(56) References cited:
- EP-A- 0 160 289
- FR-A- 2 180 912
- FR-A- 2 339 078
- FR-A- 2 548 290
- FR-A- 2 587 419

## Description

This invention relates to a hydraulic control system as described in the preamble to claim 1.

Such a system is known from EP 160 289A2. Similar systems can be found in US-A-4 201 052, 4 407 122, 4 418 612, 4 480 527, 4 569 272, EP 80 135B1 and 160 265A2. These systems are used to control a plurality of actuators such as hydraulic cylinders which are found, for example, in earth moving equipment such as excavators and cranes. For accurately controlling the position and speed of operation of the actuators, a pilot operated directional valve for each actuator is provided. The pilot hydraulic circuit may include a manually operated controller or a electrohydraulic controller. The system is simple and easy to make and maintain; the system is unaffected by change of load pressure of various portions of the system or other actuators served by the same source; the system may not use flow from the pressure source in the case of overrunning loads on the actuators. The control valves may be mounted adjacent the actuator for preventing loss of control of the load in case of malfunction in the hydraulic lines to the actuator. The valve control flow out of the actuator function to control the velocity in the case of energy generating loads; The valve that controls flow into the actuator controls the velocity in the case of energy absorbing loads. The valve system for each actuator can be mounted on its respective actuator and incorporates means for preventing uncontrolled lowering of the load in case of pressure failure due to breaking of the lines to the actuator mounted valve system; wherein the timing of operation of the valve controlling flow into the actuator and out of the actuator can be designed to accommodate the specific nature of the particular load. In certain high inertial loads such as swing drives on an excavator which utilize rotary actuators, smooth stopping and starting of the load and accurate positioning of the load are very essential.

In such a system, provision is made for sensing the maximum load pressure in one of a series of valve systems controlling a plurality of actuators and applying the higher pressure to the load sensing pump system. In addition load drop check valves are provided preventing return flow to the meter-in valve when it is in neutral.

In German patent application DE 34 13 866 A1 there is disclosed the use of a hydrostat upstream from a meter-in valve which measures the pressure differential across the meter-in valve to maintain a predetermined pressure differential. A hydrostat is provided which operates independently for each directional valve. If more flow is demanded for a number of functions in a system than the pump is capable of producing, the higher pressure function hydrostat will open fully and that function's flow will decrease while the lower pressure function will maintain demanded flow.

Among the objectives of the present invention are to provide a system which includes predetermined pressure differential across the meter-in spool which is applied by feedback from maximum load sensing pressure so that if more flow is demanded by a number of functions in a system than the pump is capable of, the inlet pressure tends to fall off to the load sensing pressure and the flow to each operating function tends to decrease proportionally tending to maintain the flow distribution to all functions; which system utilizes fewer parts and which can be readily adapted to the aforementioned systems such as shown in US-A- 4 201 052, 4 407 122, 4 418 612, 4 480 527, 4 569722 and EP 80 135B1, 160 265A2, 160 289A2.

These objects are fulfilled by the teaching of claim 1. Claims 2 - 5 show further developments of the hydraulic control system.

Accordingly, when there is a series of valve systems, provision is made for sensing the maximum load pressure therein and applying the higher pressure to the pump means. The combined hydrostat and load drop check valve in each valve system provides the dual function of maintaining a predetermined pressure drop across the pertinent meter-in valve, independent of actual pressure, which will result in constant flow as well as provide the load drop check valve functionof opening during flow from themeter-in valve and closing when the meter-in valve is in its neutral position.

Embodiments of the invention are described in conenction with the drawing, wherein
- Fig. 1: is a schematic drawing of a hydraulic control system;
- Fig.2: is a sectional view of a valve system shown in Fig. 1;
- Fig. 3: is a schematic drawing of a modified form of the hydraulic control system;
- Fig. 4: is a sectional view of the valve system shown in Fig. 3;
- Fig. 5: is a schematic drawing of a hydraulic circuit embodying a plurality of control systems for controlling a plurality of actuators;
- Fig. 6: is a fragmentary sectional view of a combined hydrostat and load drop check valve.

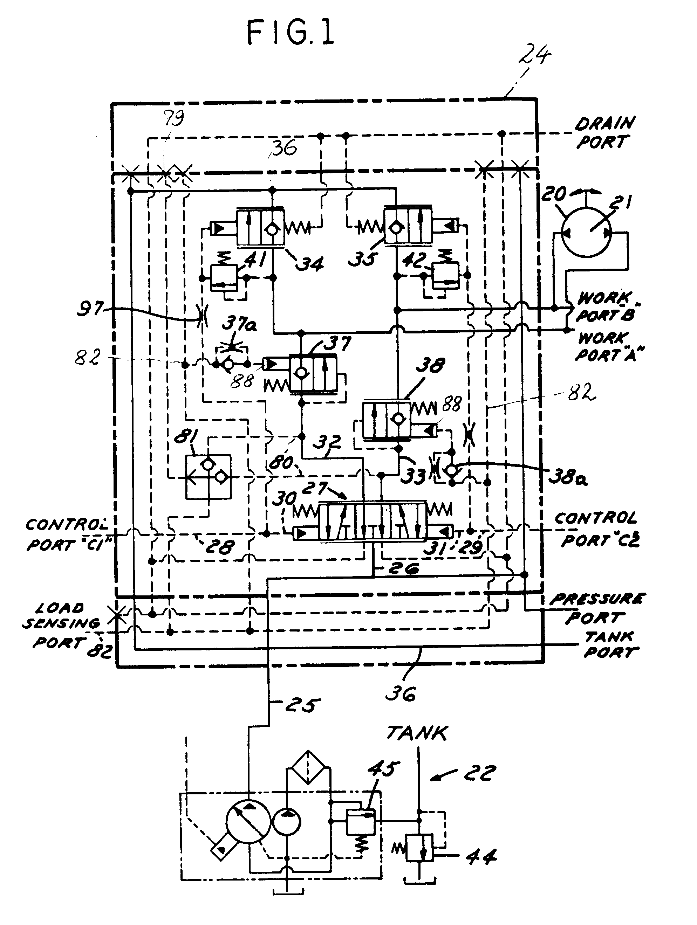

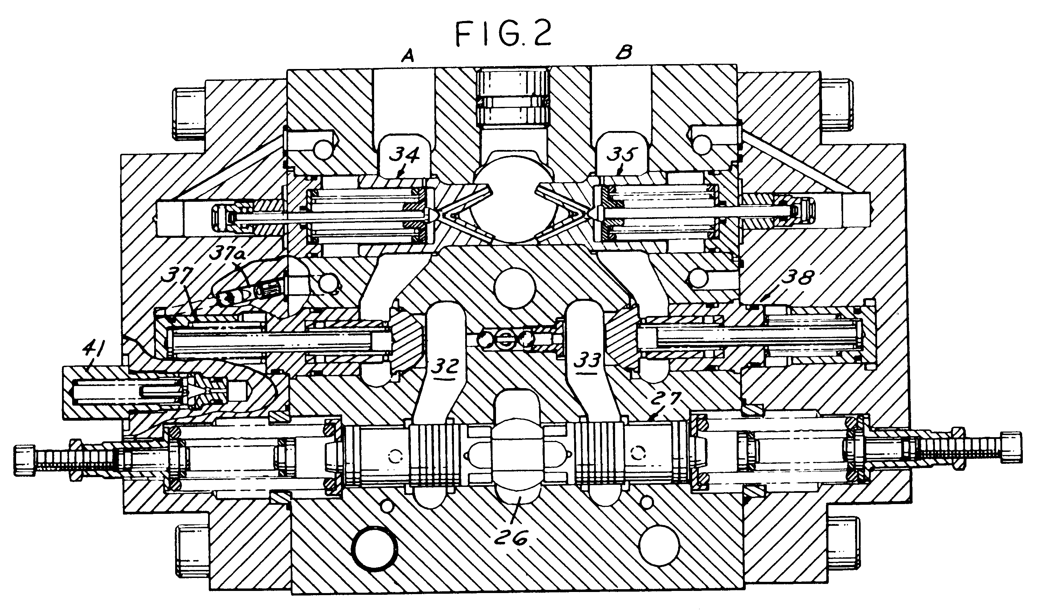

Referring to Figs. 1 and 2, the hydraulic control system embodying the invention is utilized with an actuator 20, herein shown as a rotary hydraulic motor, having an output shaft 21 supplied from a load sensing pump control system in accordance with conventional construction. The load sensing pumpcontrol system may comprise a variable displacement control system or a fixed displacement pump including a load sensing relief valve for delivering a controlled flow output through output line 25. The hydraulic system further includes a manually or electrohydraulically operated controller, not shown, that directs a pilot pressure through control ports C1, C2 to a valve system for controlling the direction of movement of the actuator, as presently described. Fluid from a pump 22 is directed through a pressure port to the output line 25 and line 26 to a meter-in valve 27 that functions to direct and control the flow of hydraulic fluid to one or the other of the actuator ports A or B and to the actuator 20. The meter-in valve 27 is pilot pressure controlled by the controller, not shown, through lines 28, 29 and lines 30, 31 to the opposed ends thereof, as presently described.Depending upon the direction of movement of the valve, hydraulic fluid passes through working lines 32, 33 to one or the other ports A or B of the actuator 20.

The hydraulic system further includes a meter-out valve 34, 35 associated with each end of the actuator in lines 32, 33 for controlling the flow of fluid from the end of the actuator to which hydraulic fluid is not flowing from the pump to a tank passage 36, as presently described.

The hydraulic system further includes combined hydrostat and load drop check valves 37, 38 in the working lines 32, 33. Each valve 37, 38 may include a one way restrictor 37a, 38a connected to a load sensing line 82 and comprising a restricted orifice and a check valve (see Fig. 1).

The system may include spring-loaded anti-cavitation valves, not shown, which are adapted to open the lines 32, 33 to the tank passage 36. In addition, spring-loaded poppet valves 41, 42 are a part of each meter-out valve 34, 35 and act as pilot operated relief valves.

The system also includes a back pressure valve 44 associated with the return or tank line. Back pressure valve 44 functions to minimize cavitation when an overrunning or a lowering load tends to drive the actuator down.A charge pump relief valve 45 is provided to take excess flow above the inlet requirements of the pump 22 and apply it to the back pressure valve 44 to augment the fluid available to the actuator.

Meter-in valve 27 comprises a bore in which a spool is positioned which in the absence of pilot pressure is maintained in a neutral position by springs. The spool normally blocks the flow from the pressure passage 26 to the working lines or passages 32, 33. When pilot pressure is applied to either passage 30 or 31,the meter-in spool is moved in the direction of the pressure until a force balance exists among the pilot pressure, the spring load and the flow forces. The direction of movement determines which of the passages 32, 33 is provided with fluid under pressure from passage 26.

When pilot pressure is applied to either line 28 or 29, it is also applied to either meter-out valves 34 or 35, so that one of the valves is actuated to throttle flow from the associated end of actuator to tank passage 36.

It can thus be seen that the same pilot pressure which functions to determine the direction of opening of the meter-in valve also functions to determine and control the opening of the appropriate meter-out valve so that the fluid in the actuator can return to the tank line.

In the case of an energy absorbing load, when the controller is moved to operate the actuator in a predetermined direction, for example, by pilot pressure applied through line 28 and passage 30 moving the spool of the meter-in valve in a direction causing hydraulic fluid under pressure to flow through passage 33 opening valve 38 and continuing to the port B of the actuator. This same pilot pressure is applied to the meter-out valve 34 permitting the flow of fluid out of the port A to the return or tank passage 36. The meter-out valve 34 opens before the meter-in valve 27 under the influence of pilot pressure.

When the controller is moved as described above, yet for an overrunning or lowering a load, the load on the actuator forces hydraulic fluid through the opening A past the opened meter-out valve 34 to the return or tank passage 36. At the same time, the check valve passage of valve 35 is permitting return of some or all of the fluid to the inlet end of the actuator through opening B thereby avoiding cavitation. Thus, the fluid is circulated between the elements A, 34, 36, 35, B and 20 without opening the meter-in valve 27 and without utilizing fluid from the pump as the case is.

To achieve a float position, the controller is bypassed and pilot pressure is applied to both pilot pressure lines 28, 29. This is achieved, for example, by a circuit, not shown, which will apply the fluid from a pilot pump directly to lines 28, 29 causing both meter-out valves 34 and 35 to open and thereby permit both ends of the actuator to be connected to tank pressure. In this situation, the meter-out valves function in a manner permitting fluid to flow back and forth between opposed ends of the cylinder or motor 20.

By varying the spring forces and the areas on the meter-in valve 27 and the meter-out valves 34, 35, the timing between these valves can be adjusted. Thus, for example, if the meter-out valve leads the meter-in valve, the meter-in valve 27 will control flow and speed in the case where the actuator 20 is being hydraulically driven. If however the load is overhauling, the load-generated pressure will result in the meter-out valve 34 or 35 controlling flow and speed. In such a situation, the anti-cavitation check valves (not shown) will additionally permit fluid to flow to the supply side of the actuator so that no pump flow is needed to fill the actuator in an overhauling load mode or condition.

Provision is made for sensing the maximum load pressure in one of a multiple of valve systems 24 controlling a plurality of actuators and applying that higher pressure to the load sensitive variable displacement pump 22. Each valve system 24, 24a includes a shuttle valve arrangement 81, 81a that receives load pressure from an adjacent valve system 24, 24a through a line 79 and home load pressure from working line 32 or 33 through connecting lines 80 and senses which of the pressures is greater and shifts to apply the higher pressure to load sensity line 82. Thus, each valve system 24, 24a in succession incorporates a shuttle valve arrangement 81, 81a which compares the load pressure therein with the load pressure of an adjacent valve system 24, 24a and transmit the higher pressure to the adjacent valve system in succession and finally apply the highest load pressure through line 82 to the pump control system, which preferably is a displacement setting system, as shown.

The above described circuit and the details of the preferred construction are shown and described in the aforementioned patents which are incorporated herein by reference. The single meter-in valve 27 may be replaced by two meter-in valves as described in the afore-mentioned applications.

The hydraulic system shown in Figs. 1 and 2 differs from the mentioned patents in that a combined hydrostat-load drop check valve 37, 38 is provided in place of the load drop check valve of these prior patents.

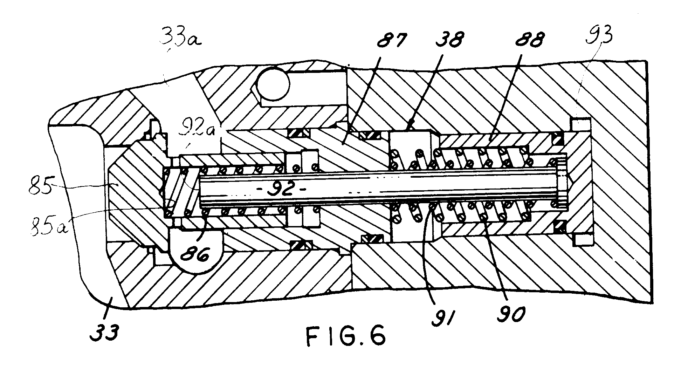

Referring to Fig. 6, the combined hydrostat-load drop check valves 37, 38 perform the function of load drop check valves such as are shown and described in the aforementioned patents, and in addition, function to maintain a predetermined pressure drop across the associated meter-in valve 27.

As shown in Fig. 6, the valve 37 or 38 comprises a poppet or check valve member 85 that is yieldingly urged by a spring 86 into position obstructing flow in working line 33, 33a until the pressure drop between the line portions 33 and 33a exceeds a predetermined value as determined by the size of the spring 86. The spring 86 has the end thereof remote from the poppet 85 engaging a retainer 87 which it engages and is stationary in the body of the valve system 24. A pressure compensating piston 88 is yieldingly urged by spring 90 to the right as viewed in Fig. 6. A spring 91 urges a pin 92 to the right against piston 88. The fluid pressure n the load sensing line 82 is applied through assembly 37a or 38a into chamber 93 to the right of the piston 88.

Piston 88 and springs 90, 91 form a means for transforming pressure into an opening width and can be called "hydrostat". The position of the end face 92a of pin 92 is a measurement of the highest load pressure as sensed in line 82 and forms a support face to a stop face 85a of poppet member 85. This support is effective when the pressures in working line 33 and chamber 93 are different so that the poppet member 85 cannot be opened to such an extend as would be possible without the hydrostat 88 to 93. So an additional restriction is formed by member 85 compensating for the additional pressure drop between the higher output pressure in line 25 from the pump and the working pressure in line 33 which, when the hydrostat is correctly adjusted, stays unchanged. In other words, the pressure drop across the meter-in valve 27 remains constant,and a constant flow is provided in the working line 33, independent of the higher pump pressure in the output line 25.

The pressure sensing hydrostat shown and described maintains a predetermined pressure drop across the meter-in valve by feedback from the maximum load sensing pressure. Accordingly, as more flow is demanded by a number of functions in the system than the pump is capable of providing, the inlet pressure tends to fall off to the load sensing pressure and the flow to each operation function tends to decrease proportionally tending to maintain the flow distribution to all functions.

When only a single function is being performed, as in the single hydraulic system shown in Fig. 1, the spring opens the hydrostatic piston 88 wide open thereby reducing the pressure drop through the valve and reducing energy losses. This might occur, for example, when the system is propelling a construction vehicle from one site to another.

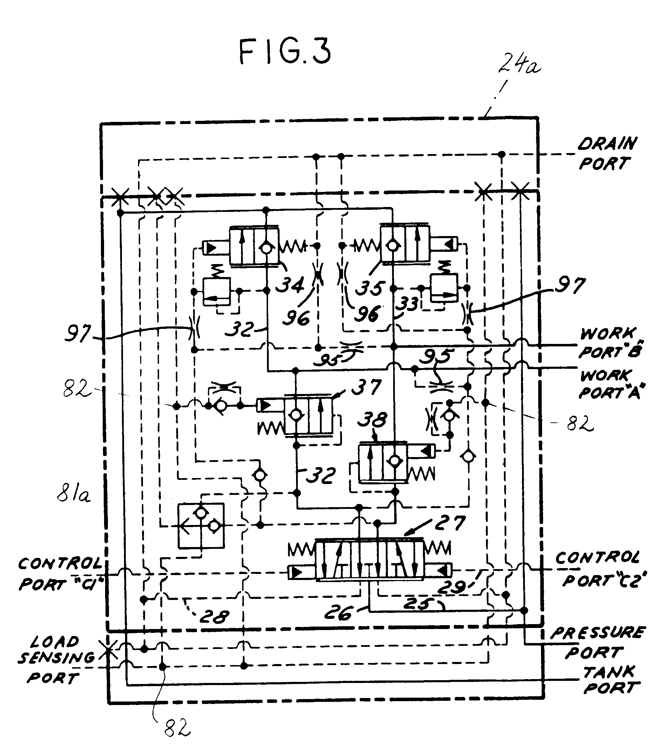

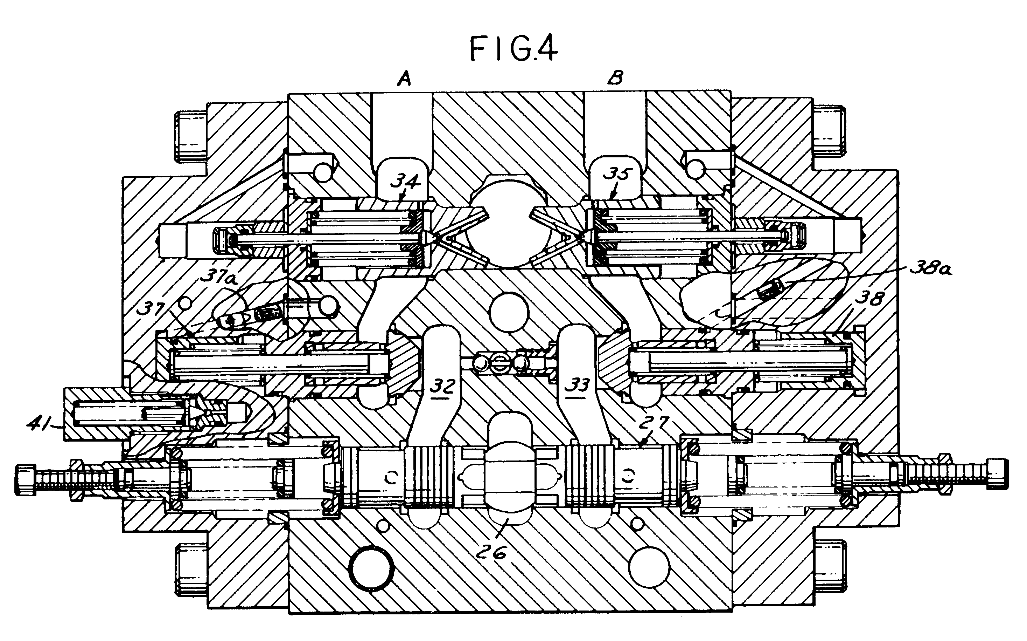

The valve system 24a set forth in Figs. 3 and 4 is modified to that shown in Figs. 1 and 2 to include a counterbalance function as described in EP 160,289 A2 which is incorporated herein by reference. One or both working lines 32, 33 have an extension consisting of a restrictor arrangement 95, 96, 97 leading to a respective meter-out valve 34 or 35 and opening same to a controlled extend. The restrictors function to reduce the pressure tending to open the meter-out valve means associated with the other working line when the meter-in valve means is operated to supply pressure to said one working line.

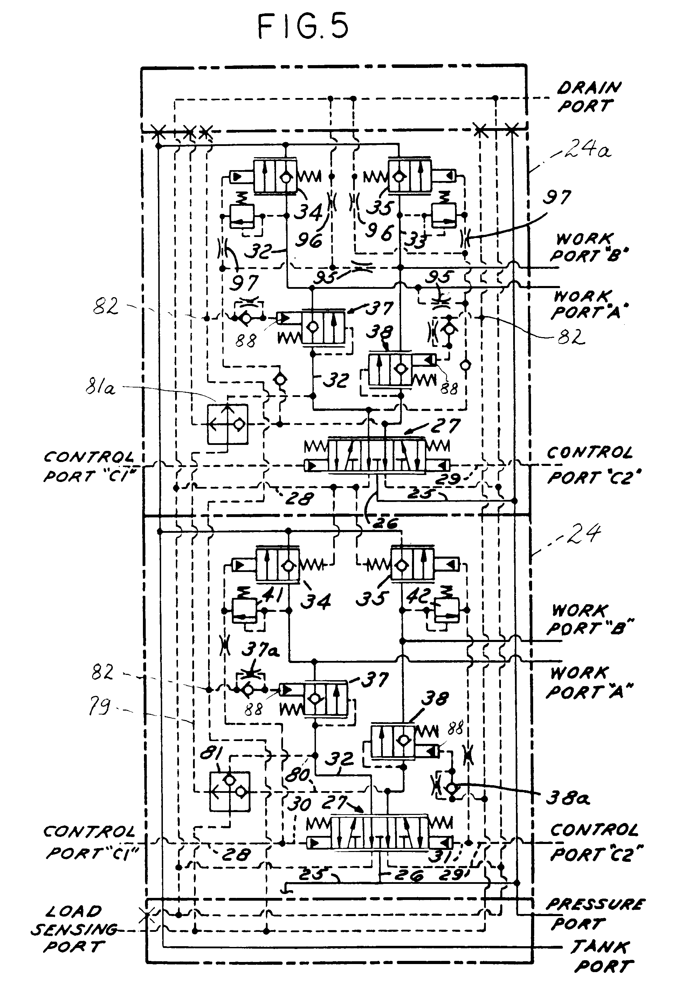

The manner in which one or more valve systems 24, 24a can be combined is shown in Fig. 5. The load sensing line 79 of system 24 is connected to shuttle valve 81a of valve system 24a, so the shuttle valve arrangement 81, 81a senses the highest load pressure and feeds it back to the pump control to establish a system pressure. The maximum load sensing pressure signal is applied behind the piston 88 of each valve system 24, 24a, which piston has an area approximately equal to the area of the seat of the check valve member 85. This causes the load drop check valve member 85 tofunction as a hydrostat and maintain constant pressure drop across themeter-in spool27. If the pressures and areas were equal and the load drop check spring 86 would hold the check valve member 85 closed, it would never open. Accordingly, the additional spring 90 has been added to oppose the load sensing feedback pressure.

## Claims

1. A hydraulic control system comprising:
a) a hydraulic actuator (20) having a movable element (21) and opposed openings (A, B) adapted to alternatively function as inlets and outlets for moving said element (21) of the actuator (20) in opposite directions,
b) pump means (22) including a load sensing system (79 to 82) and a pump control system for supplying a controlled fluid output (through 25),
c) a pilot controller,
d) an actuator controlling valve system (24) comprising
d.1) a meter-in valve (27) to which fluid (via 26) of said output (25) is supplied and which is controlled by said pilot controller so as to direct said fluid (supplied via 26) to one of a pair of working lines (32, 33) which therefore is on working pressure and extends from said meter-in valve (27) to a respective opening (A, B) of said actuator (20),
d.2) said valve system (24) also comprising at least one meter-out valve (34) associated with one (32) of said working lines (32, 33) for controlling the flow out in said working line (32), said meter-out valve (34) being adapted to be pilot-operated either by said pilot controller or in response to restricted working pressure fed from the other working line (33) through a restrictor arrangement (95, 96, 97) to said meter-out valve (34),
characterized in that
d.3) said valve system (24) further comprises at least one combined hydrostat and load drop check valve (37 or 38), the load drop check portion (85, 86) thereof being included within a respective one of said working lines (32 or 33) and, when there is sufficient pressure drop in said line (32 or 33), being opened so as to permit fluid to flow from the meter-in valve (27) to the actuator (20), the extent of opening being restricted by the hydrostat portion (88, 90, 91, 92) which is acted upon by load pressure (in 82) so that, if the load pressure sensed exceeds a predetermined value, the hydrostat portion (88...92) controls the extent of opening movement of the check valve portion (85, 86) so as to maintain a predetermined pressure drop across the meter-in valve (27), independent of actual fluid output pressure (in 25, 26) so that a constant flow will be provided in said respective working line (32 or 33).

2. The hydraulic control system set forth in claim 1
wherein both working lines (32, 33) include a respective combined hydrostat and load drop check valve (37, 38).

3. The hydraulic control system set forth in claim 1 or 2 comprising
a second hydraulic actuator, a second actuator controlling valve system (24a) with the features d.1), d.2), d.3), and
wherein said load sensing system (79, 80, 81, 81a, 82) is associated with said working lines (32, 33) of both actuator controlling valve systems (24, 24a) and operable to shift and apply the greater pressure to said combined hydrostat and load check valves (37, 38) as well as to said pump control system to change the controlled flow output (in 25) of the pump (22).

4. The hydraulic control system set forth in any of claims 1 to 3
wherein said combined hydrostat and load drop check valve (37, 38) comprises
a poppet member (85) seated within said respective working line (32, 33, 33a) to which it is assigned, said poppet member (85) being biased on its seat by a valve spring (86),
a pressure compensating piston (88) having a cross-sectional area similar to that of said seat of said poppet member (85) and being acted upon by load pressure (in 82) to move in the direction of said poppet member (85) and by spring means (90, 91) to move in the opposite direction, and
a pin (92) connected to said piston (88) to follow the movement thereof and to transmit such movement onto said poppet member (85) in the sense of increasing said bias of said valve spring (86).

5. The hydraulic control system set forth in claim 5
wherein said load pressure (in 82) is connected to a chamber (93) behind said pressure compensating piston (88) through one way restrictor means (37a, 38a).

## Patentansprüche

1. Hydraulisches Steuersystem mit folgenden Merkmalen:
a) ein hydraulischer Betätiger (20) weist ein bewegbares Element (21) und sich gegenüberliegende Öffnungen (A, B) auf, die abwechselnd als Einlaß und Auslaß dienen, um das Element (21) des Betätigers (20) in entgegengesetzten Richtungen zu bewegen;
b) eine Pumpeneinrichtung (22) umfaßt ein Lastabtastsystem (79 bis 82) und ein Pumpregelsystem zur Förderung eines geregelten Fluidauslaßstroms (über 25);
c) eine Pilotsteuerung;
d) ein Ventilsystem (24) zur Steuerung des Betätigers mit folgenden Merkmalen:
d.1) ein Zuflußbemessungsventil (27), dem Fluid (über 26) des Auslasses (25) zugeführt wird, und welches durch die Pilotsteuerung so gesteuert wird, daß das Fluid (zugeführt über 26) einer Arbeitsleitung eines Paars von Arbeitsleitungen (32, 33) zugeführt wird, die deshalb auf Arbeitsdruck liegt und sich von dem Zufuhrbemessungsventil (27) zu der jeweiligen Öffnung (A, B) des Betätigers (20) erstreckt;
d.2) das Ventilsystem (24) weist mindestens ein Abfuhrbemessungsventil (34) auf, die der einen (32) der beiden Arbeitsleitungen (32, 33) zugeordnet ist, um den rückfließenden Strom in der Arbeitsleitung (32) zu steuern, wobei das Abfuhrbemessungsventil (34) von Vorsteuerdruck betrieben werden kann, und zwar entweder durch die Pilotsteuerung oder in Abhängigkeit von gedrosseltem Arbeitsdruck, der von der anderen Arbeitsleitung (33) über eine Drosselanordnung (95, 96, 97) zu dem Abfuhrbemessungsventil (34) zugeführt wird,
dadurch gekennzeichnet, daß
d.3) das Ventilsystem (24) mindestens ein Lastabfall-Rückschlagventil mit kombiniertem Hydrostaten aufweist, daß der Lastabfall Rückschlagventilteil (85, 86) innerhalb einer jeweiligen Arbeitsleitung (32 oder 33) angeordnet ist und, wenn ein genügender Druckabfall in der Leitung (32 oder 33) stattfindet, geöffnet wird, um Fluid von dem Zufuhrbemessungsventil (27) zu dem Betätiger (20) fließen zu lassen, und
daß das Ausmaß der Öffnung von dem Hydrostatteil (88, 90, 91, 92) begrenzt wird, der unter Lastdruck (bei 82) steht, so daß, wenn der abgetastete Lastdruck einen vorbestimmten Wert übersteigt, der Hydrostatteil (88, 92) das Ausmaß der Öffnungsbewegung des Rückschlagventilteils (85, 86) bestimmt, um so einen vorbestimmten Druckabfall an dem Zufuhrbemessungsventil (27) aufrechtzuerhalten, und zwar unabhängig von dem tatsächlichen Druck des Fluidauslasses (bei 25, 26), so daß sich ein konstanter Strom in der jeweiligen Arbeitsleitung (32 oder 33) einstellt.

2. Hydraulisches Steuersystem nach Anspruch 1,
dadurch gekennzeichnet,
daß beide Arbeitsleitungen (32, 33) ein jeweiliges Lastabfall-Rückschlagventil mit kombiniertem Hydrostaten (37, 38) enthalten.

3. Hydraulisches Steuersystem nach Anspruch 1 oder 2,
dadurch gekennzeichnet,
daß es einen zweiten hydraulischen Betätiger und ein zweites Ventilsystem (24a) zur Steuerung des Betätigers mit den Merkmalen d.1 , d.2 und d.3 enthält und
daß das Lastabtastsystem (79, 80, 81, 81a, 82) den Arbeitsleitungen (32, 33) beider Ventilsysteme (24, 24a) zur Steuerung des Betätigers zugeordnet ist und sich so verschiebt, daß der jeweils größere Druck dem Lastabfall-Rückschlagventil mit kombiniertem Hydrostaten (37, 38) sowie dem Pumpenregelsystem zugeführt wird, um den geregelten Auslaßstrom (bei 25) der Pumpe (22) zu ändern.

4. Hydraulisches Steuersystem nach einem der Ansprüche 1 bis 3,
dadurch gekennzeichnet,
daß das Lastabfall-Rückschlagventil mit kombiniertem Hydrostaten (37, 38) folgende Elemente aufweist:
ein Sitzventilelement (85), das innerhalb der jeweiligen zugeordneten Arbeitsleitung (32, 33, 33a) sitzt und auf seinen Sitz infolge einer Ventilfeder (86) vorgespannt ist,
einen Druckkompensationskolben (88), der eine Querschnittsfläche ähnlich der des Sitzes des Sitzventilelements (85) aufweist und auf den der Lastdruck (bei 82) zur Verschiebung in Richtung des Sitzventilelements (85) und eine Federeinrichtung (90, 91) zur Verschiebung in die entgegengesetzte Richtung einwirken, und einen Stift (92), der mit dem Kolben (88) verbunden ist, um dessen Bewegung zu folgen und die Bewegung auf das Sitzventilteil (85) im Sinne der Zunahme der Vorspannung der Ventilfeder (86) zu übertragen.

5. Hydraulisches Steuersystem nach Anspruch 5,
dadurch gekennzeichnet,
daß der Lastdruck (bei 82) mit einer Kammer (93) hinter dem druckkompensierenden Kolben (88) über eine Einweg-Drosseleinrichtung (37a, 38a) verbunden ist.

## Revendications

1. Système de commande hydraulique comportant:
a) un appareil hydraulique de mise en action (20) possédant un élément mobile (21) et des ouvertures opposées (A, B) aptes à fonctionner alternativement comme des orifices d'admission et des orifices de sortie afin de déplacer ledit élément (21) de l'appareil (20) de mise en action dans des sens opposés,
b) des moyens (22) de pompage comprenant un système détecteur de charge (79 à 82) et un système de commande de pompe destinés à fournir un débit régulé de fluide ( par l'intermédiaire de 25),
c) un dispositif de commande pilote,
d) un système (24) de valves commandant l'appareil de mise en action comportant
d.1) une valve de dosage (27) à l'entrée à laquelle est fourni le fluide (par l'intermédiaire de 26) dudit débit (25) et qui est commandée par ledit dispositif de commande pilote de manière à diriger ledit fluide (fourni par l'intermédiaire de 26) à l'une d'une paire de lignes actives (32, 33) qui par conséquent est à la pression de service et qui s'étend depuis ladite valve de dosage (27) à l'entrée jusqu'à une ouverture respective (A, B) dudit appareil (20) de mise en action,
d.2) ledit système (24) de valves comportant également au moins une valve de dosage (34) à la sortie associée avec l'une (32) desdites lignes actives (32, 33) pour réguler le débit de sortie dans ladite ligne active (32), ladite valve de dosage (34) à la sortie étant apte à être pilotée soit par ledit dispositif de commande pilote soit en réponse à une pression de service restreinte amenée à partir de l'autre ligne active (33) par l'intermédiaire d'un agencement réducteur (95, 96, 97) jusqu'à ladite valve de dosage (34) à la sortie,
caractérisé en ce que
d.3) ledit système (24) de valves comporte en outre au moins un ensemble d'hydrostat et de clapet de retenue pour chute de charge combinés (37 ou 38), la portion formant clapet de retenue (85, 86) pour chute de charge de cet ensemble étant comprise à l'intérieur de l'une respectivement desdites lignes actives (32 ou 33) et, lorsqu'il y a une chute de pression suffisante dans ladite ligne (32 ou 33), s'ouvrant de façon à permettre à du fluide de s'écouler à partir de la valve de dosage (27) à l'entrée jusqu'à l'appareil (20) de mise en action, l'amplitude de l'ouverture étant restreinte par la portion formant hydrostat (88, 90, 91, 92) sur laquelle agit la pression de charge (dans 82) de telle manière que, si la pression de charge détectée dépasse une valeur déterminée à l'avance, la portion formant hydrostat (88... 92) régule l'amplitude du déplacement d'ouverture de la portion formant clapet de retenue (85, 86) de façon à maintenir une chute de pression déterminée à l'avance d'un côté à l'autre de la valve de dosage (27) à l'entrée, indépendante de la pression effective du débit de fluide (en 25, 26) si bien qu'un débit constant sera assuré dans ladite ligne active correspondante (32 ou 33).

2. Système de commande hydraulique exposé dans la revendication 1 dans lequel l'une et l'autre des deux lignes actives (32, 33) comprennent un ensemble respectif d'hydrostat et de clapet de retenue pour chute de charge combinés (37, 38).

3. Système de commande hydraulique exposé dans la revendication 1 ou dans la revendication 2 comportant un second appareil hydraulique de mise en action, un second système (24a) de valves commandant cet appareil de mise en action présentant les particularités d.1), d.2), d.3), et
dans lequel ledit système détecteur de charge (79, 80, 81, 81a, 82) est associé avec lesdites lignes actives (32, 33) des deux systèmes (24, 24a) de valves commandant les appareils de mise en action et est susceptible d'être manoeuvré de façon à transférer et appliquer la plus grande des deux pressions auxdits ensembles (37, 38) d'hydrostats et de clapets de retenue de charge combinés ainsi qu'audit système de commande de pompe afin de modifier le débit de sortie régulé (dans 25) de la pompe (22).

4. Système de commande hydraulique exposé dans l'une quelconque des revendications 1 à 3 dans lequel ledit ensemble d'hydrostat et de clapet de retenue pour chute de charge combinés (37, 38) comporte un organe formant soupape en champignon (85) ayant son siège à l'intérieur de ladite ligne active respective (32, 33, 33a) à laquelle il est affecté, ledit organe formant soupape en champignon (85) étant poussé sur son siège par un ressort (86) de soupape,
un piston (88) compensateur de pression ayant une aire de section droite semblable à celle dudit siège dudit organe formant soupape en champignon (85) et étant soumis à une pression de charge (en 82) qui agit de façon à le déplacer en direction dudit organe formant soupape en champignon (85) et à des moyens formant ressorts (90, 91) qui agissent de façon à le déplacer en direction opposée, et
une broche (92) raccordée audit piston (88) afin de suivre le déplacement de ce dernier et de transmettre un tel déplacement à l'organe (85) formant soupape en champignon en ce sens qu'elle augmente ladite poussée dudit ressort (86) de soupape.

5. Système de commande hydraulique exposé dans la revendication 4 dans lequel ladite pression de charge (en 82) est raccordée à une chambre (93) située derrière ledit piston (88) compensateur de pression par l'intermédiaire de moyens formant dispositifs réducteurs à sens unique (37a, 38a).
